# EUROPEAN PATENT APPLICATION

(11) **EP 1 124 086 A1**
(43) Date of publication of application: **16.08.2001**
(21) Application number: 00830097.2
(22) Date of filing: 11.02.2000
(51) Int. Cl.: F16M 7/00

(54) **Stem for a support foot for heavy bodies and support foot incorporating said stem**

(71) Applicant: Rexnord Marbett S.p.A., 42015 Correggio (Reggio Emilia) (IT)
(72) Inventor: De Angelis, Umberto, 42015 Correggio-Reggio Emilia (IT); Bellini, Emanuele, 41037 Mirandola-Modena (IT)
(74) Representative: Maccalli, Marco

(57) **Abstract**

A stem for a support foot for heavy bodies, in particular operating machines and the like, comprises a shank (2;20) and an end-piece (3;30) shaped so as to form at one end thereof a joining head (7) which can be joined to a base block (9), the shank (2;20) and the end-piece (3;30) being formed as separate parts and being provided with mutual joining means (4,8;40,80;41,81;82,42) for joining the end-piece (3;30) to one end of the shank (2;20).

## Description

The present invention relates to support feet of the type used for supporting heavy bodies, in particular operating machines such as conveyor belts.

Support feet of the abovementioned type are generally formed by a stem joined at one of its ends to a base block intended to rest on a support surface, for example the ground. At its other end the stem is joined, usually by means of screwing so as to allow adjustment of the foot height, to the heavy body which must be supported, for example to an operating machine such as a conveyor belt, in particular to a frame thereof.

The connection between the stem and the base block may be of a rigid type - in which case the feet are referred to as fixed feet - or may be articulated such as to allow relative directional adjustment of said stem and base block so that they may be adapted to support surfaces which are not flat; in this case they are referred to as articulated support feet.

The main parameter which characterizes support feet for heavy bodies is the maximum withstandable load, understood as being the value of the load applied to the stem of the foot corresponding to the limit of elastic deformability of the said foot. Support feet with stems made of synthetic material or steel and having a varying diameter, depending on the maximum withstandable load, are commercially available. The base blocks may also be made of synthetic material or steel, again depending on the maximum load.

Feet with a stem and base block made of steel are able to withstand maximum loads generally higher than those which can be withstood by feet with a stem and base block made of synthetic material and by feet with a steel stem and base block made of synthetic material. However, totally steel feet are more costly and their greater cost cannot be justified in many applications where there are no excessively demanding requirements for the maximum withstandable load.

Support feet with a base block made of synthetic material are therefore generally preferred.

In the case of feet with a base block made of synthetic material and in particular, but not exclusively, articulated feet, a limit value for the maximum withstandable load is determined by the fact that the contact area between the stem and the base block is small and, therefore, the load applied to the stem produces a very high specific load on the base block which may cause breakage thereof even in the case of loads applied to the stem which are not very high.

In order to overcome this problem, on the one hand, it has been necessary to use, for manufacture of the base block, synthetic materials which are suitably constant, over time, as regards the strength properties of the product and are approved for this purpose, for example polyamide with a glass-fibre filler having a low or zero content of surplus material recycled from previous production cycles, and which are therefore somewhat costly. On the other hand, attempts have been made to increase the contact area between the stem and the base block by modifying the shape of the stem end to be joined to the base block.

In particular, the manufacture of stems which, at their end to be joined to the base block, terminate in a spherical head is known. This spherical head, engaging in a matching seat formed in the base block, ensures a fairly broad area of contact between the stem and the base block. The load applied to the stem is thus distributed over a relatively wide area of the base block, reducing the specific load and therefore increasing the maximum load which can be withstood by the support foot.

However, in the case of steel stems, which are typically made from steel rods or bars with a hexagonal cross-section, in order to obtain, by means of turning, a spherical head of suitable diameter, it may be necessary to use initially rods or bars with a gauge greater than that which would be strictly necessary to withstand the desired load. It is obvious, in fact, that the diameter of the spherical head which may be obtained by means of turning of a rod or bar with a hexagonal cross-section cannot be greater than the initial gauge of the rod or the bar.

This results in a considerable wastage of material in addition to an increase in the time required for machining.

In view of the state of the art described, an object of the present invention is to provide a stem for support feet which does not have the abovementioned drawbacks.

In accordance with the present invention, this object is achieved by means of a stem for a support foot for heavy bodies, in particular operating machines and the like, characterized by comprising a shank and an end-piece shaped so as to form at one end thereof a joining head which can be joined to a base block, the shank and the end-piece being formed as separate parts and being provided with mutual joining means for joining the end-piece to one end of the shank.

The characteristic features and advantages of the present invention will emerge clearly from the following detailed description of some possible practical embodiments thereof, illustrated purely by way of non-limiting examples in the accompanying drawings in which:
Figure 1 is a partially sectioned and exploded axonometric view of a stem for a support foot in accordance with a first possible practical embodiment of the present invention;
Figure 2 is a partially sectioned and exploded axonometric view of a support foot using the stem according to Figure 1;
Figure 3 is an axonometric view of the support foot according to Figure 2 in the assembled condition;
Figures 4, 5, 6A and 6B and 7 are partially sectioned axonometric views of stems in accordance with other possible practical embodiments of the present invention.

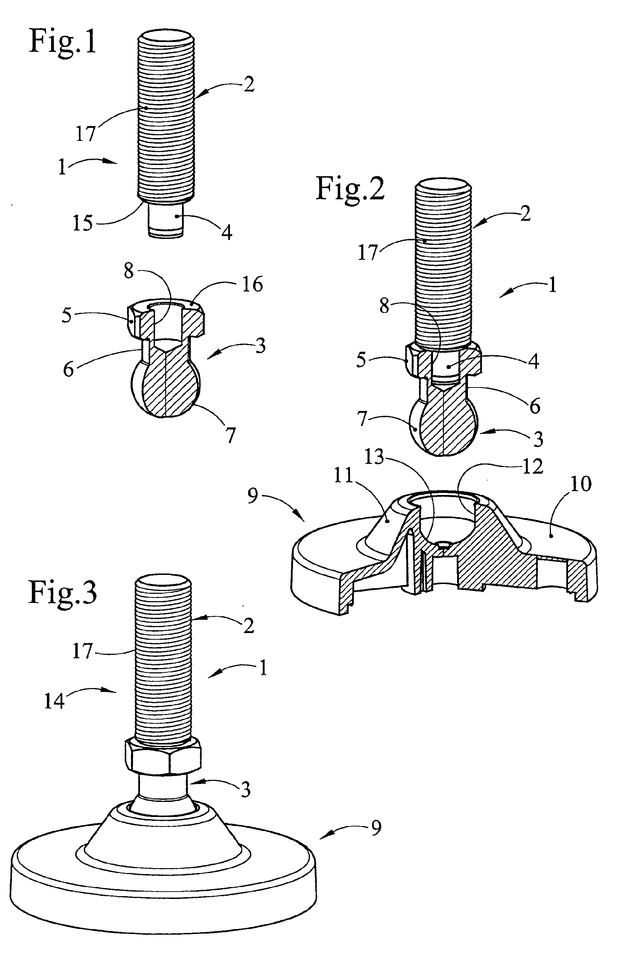

Figure 1 shows an axonometric and partially sectioned view of a stem, indicated in its entirety by 1, for support feet for heavy bodies in accordance with a first possible practical embodiment of the present invention. More precisely, Figure 1 shows the stem 1 as it is obtained after manufacture and prior to assembly.

The stem 1 is composed of two distinct and separate parts, i.e. a shank 2 and an end-piece 3.

The shank 2 is an externally threaded cylindrical rod 17 terminating at one of its ends in a pin 4 which is also cylindrical and has a smaller diameter than the diameter of the rod 17. A shoulder 15, which is flat or tapered or also slightly conical, is therefore formed between the pin 4 and the rod 17.

The end-piece 3 is a single body comprising a first portion 5 externally shaped so as to form a spanner-gripping surface, a second cylindrical portion 6 and a spherical head 7. The end-piece 3 has formed in it, on the opposite side to the head 7, namely on the side where the free surface of the portion 5 is situated, a blind hole 8 which has a circular cross-section and a diameter substantially corresponding to the diameter of the pin 4 of the shank 2 and a depth preferably at least equal to the length of the pin 4. A substantially flat, annular, contact surface 16 is formed in the region of the free surface of the portion 5.

The stem 1 is assembled by inserting the pin 4 of the shank 2 fully into the hole 8 of the end-piece 3 until the annular surface 16 comes up against the shoulder 15. A cylindrical connection between the shank 2 and the end-piece 3 is thus formed. Once the shank 2 and the end-piece 3 have been assembled, the stem 1 shown in Figure 2 is obtained.

The diameters of the pin 4 and the hole 8 intended to receive it will be preferably such that the pin 4 engages into the hole 8, interfering slightly with the walls of the said hole 8. In this way, relative rotation of the end-piece 3 and the shank 2 is prevented.

By way of an alternative to, or in addition to that described above, in order to achieve a connection between shank and end-piece without any possibility of mutual rotation, suitable adhesives may be used.

The stem 1 thus assembled is ready to be combined with a respective base block 9, for example of the type shown in Figure 2.

The base block 9 shown purely by way of example comprises a body which, in the example, has a circular plan shape, but generally may have other shapes, is made as a single piece of synthetic material and is formed so as to have a base 10 from which there projects, substantially in a central position, a frustoconical raised portion 11 which has, formed inside it, a chamber 12 with a substantially hemispherical bottom surface 13 matching the spherical head 7 of the stem 1.

The stem 1 is assembled with the base block 9 so as to form the support foot 14 shown in Figure 3, by inserting the spherical head 7 of the stem 1 into the chamber 12 of the base block 9. A ball joint is thus formed between the stem 1 and the base block 9, said joint allowing relative directional adjustment of the stem with respect to the base block. Moreover, the load which will be applied to the stem will be distributed substantially over the entire bottom surface 13 of the chamber 12 formed in the base block.

During use, the shank 2 of the stem 1 is joined to a heavy body which is to be supported, for example to the frame of an operating machine such as a conveyor belt. Joining of the shank 2 to the heavy body to be supported is typically performed by means of screwing since this allows heightwise adjustment. The spanner-gripping surface 5 provided on the end-piece 3 of the stem 1 is useful for facilitating the operations of screwing of the shank 2 onto the heavy body to be supported, as well as any adjustments in the height.

According to a variation of the embodiment described above, the pin 4 of the shank 2 and the hole 8 in the end-piece 3 may be threaded so that the connection between shank and end-piece is achieved by means of screwing and not by means of simple engagement. In this case also, it is possible to use suitable adhesives in order to fix the end-piece 3 onto the shank 2, preventing accidental unscrewing and ensuring that there is no possibility of relative rotation.

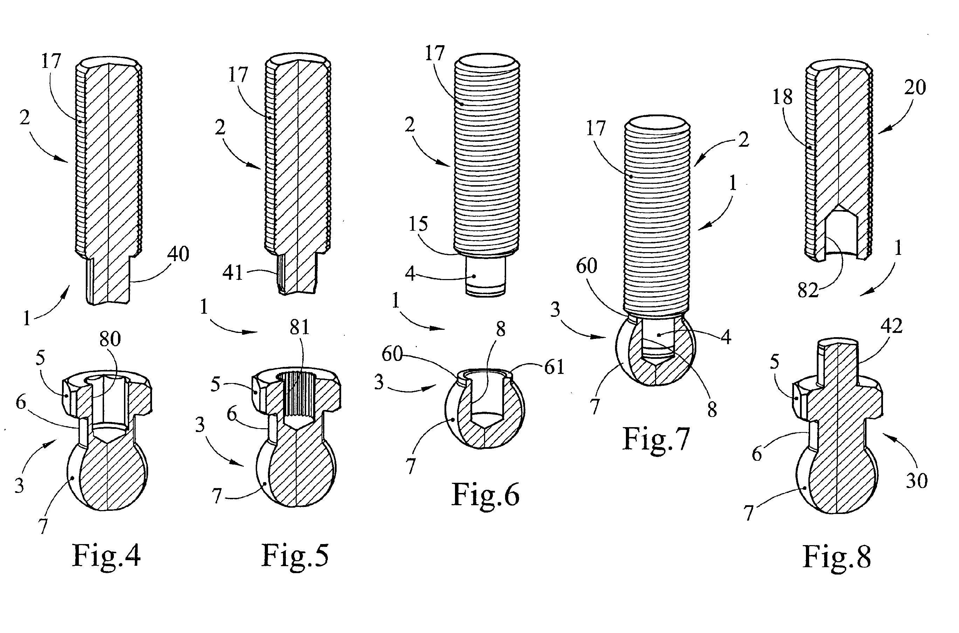

Further embodiments of the present invention are shown, again by way of non-limiting examples, in Figures 4, 5, 6A, 6B and 7. In these figures, parts identical or similar to those shown in Figures 1 to 3 are identified by the same reference numbers.

In particular, Figure 4 shows a partially sectioned and exploded axonometric view of a stem 1 which differs from the stem shown in Figure 1 and described above in that the shank 2 terminates in a pin 40 which is not cylindrical, but prism-shaped for example with a triangular, square, pentagonal, hexagonal or similar cross-section. Correspondingly, a prism-shaped hole 80 with a polygonal cross-section matching that of the pin 40 is formed in the end-piece 3. The connection which is formed between the shank 2 and the end-piece 3 is therefore of the prismatic type instead of the cylindrical type.

This solution ensures that, besides the interference which preferably will always be provided between the pin 40 and the walls of the hole 80, relative rotation of the end-piece 3 and the shank 2 of the stem 1 is prevented.

In the embodiment shown in the partially sectioned and exploded axonometric view in Figure 5, both the pin 41 of the shank 2 and the hole 81 in the end-piece 3 have a circular cross-section and are provided with knurled surfaces, preferably having substantially the same pitch. The knurled surfaces ensure that, once the pin 41 of the shank 2 has been engaged into the hole 81 of the end-piece 3, there is no possibility of relative rotation of the shank and end-piece of the stem.

The embodiment shown in the partially sectioned and exploded axonometric view in Figure 6A and after assembly in Figure 6B is similar to that shown in Figures 1 and 2 as regards the type of connection between shank 2 and end-piece 3 of the stem 1. However, the end-piece 3 consists exclusively of the spherical head 7, with the cylindrical portion 6 according to Figure 1 reduced to a small thin collar 60, the free surface 61 of which, when the pin 4 is fully engaged inside the hole 8, comes into contact with the shoulder 15 of the shank 2 (Figure 6B).

Finally, in the partially sectioned and exploded axonometric view of the embodiment according to Figure 7, the stem 1 is composed of a shank 20 and an end-piece 30.

The shank 20 consists of a rod 18 which is externally threaded for connection to the heavy body which is to be supported and which has, formed in one of its ends, a cylindrical blind hole 82 coaxial with the axis of the rod 18.

The end-piece 30 is similar to the end-piece 3 in the embodiment according to Figures 1 to 3, with the difference that the end-piece 30, instead of having the blind hole 8, is provided with a cylindrical pin 42 extending from the portion 5 on the opposite side to the spherical head 7 and having a diameter substantially corresponding to the diameter of the hole 82 provided in the shank 20. The pin 42 is thus suitable for engagement into the hole 82.

In other words, in the embodiment according to Figure 7, the positions of the pin and the respective hole are reversed with respect to those in the preceding embodiments.

It is also obvious that all the variations described above may be applied to the embodiment according to Figure 7. The pin 42 and the hole 82 may therefore be threaded so that the connection between shank and end-piece is achieved by means of screwing. Alternatively, the pin 42 and the walls of the hole 82 may be provided with knurled surfaces. By way of a further alternative the pin 42 and the hole 82 may be prism-shaped instead of cylindrical, namely, they may have a generally polygonal instead of a circular cross-section.

The two parts of the stem according to the present invention, namely the shank and the end-piece, are manufactured separately. In order to manufacture the shank, it is possible to use, initially, a smooth bar made of stainless steel or other suitable material, obtained by means of drawing and with a gauge similar to the gauge desired for the shank of the stem. By means of turning of the bar, the pin 4, 40, 41 is formed at one of the ends thereof. If desired, the knurled surface is formed on the pin. The thread on the external surface of the bar is then formed by means of rolling. The end-piece may be formed from a bar of suitable gauge, made of stainless steel or other suitable material, in particular the same material forming the stem, or a different material, which is subsequently machined by means of turning and bored so as to form the hole for engagement of the shank pin. Alternatively, the end-piece may be formed by means of cold plastic deformation, starting with a rolled bar which is forged to the final shape by means of successive cold plastic deformation operations and final machining so as to form the hole for engagement of the shank pin.

The stem according to the present invention has the main advantage that the gauge of the bar from which the stem shank is obtained is not dependent upon the desired diameter of the spherical head. As a result, it is possible to produce, instead, stems provided with spherical heads also having a diameter significantly greater than the gauge of the respective shanks, without the need for initially using bars which have a gauge much greater than the desired shank diameter and which must then be pared down so as to reduce their gauge to the desired value by means of time-consuming trimming operations resulting in a considerable wastage of material. Also taking into account the time required for assembly, the stem according to the present invention is able to achieve savings in production costs as high as 15% compared to conventional techniques.

Another advantage of the present invention lies in the fact that it is possible to manufacture in a simple manner stems which, although having shanks with the same gauge, have spherical heads with different diameters, and vice versa. It is in fact possible to manufacture a whole range of shanks, with different gauges, and end-pieces having spherical heads with different diameters, and then obtain stems with shanks and spherical heads having the desired gauges and diameters by means of simple assembly.

According to another advantageous feature of the present invention, the end-piece may be made of a material different from that of the shank. It should be pointed out, in fact, that the most critical element of the stem, from the point of view of resistance to stresses, is the shank more so than the end-piece with the spherical head. As a result of the present invention it is possible to use material which is stronger and therefore more highly valued and consequently more costly in order to construct the shank, while using, however, less expensive material for manufacture of the end-piece.

Although, in the present invention, reference has always been made to stems with end-pieces having a spherical head, this is not to be regarded as limiting the present invention. The invention in fact is applicable in general to the manufacture of stems composed of a shank and an end-piece having a head for joining to a base block of a support foot, said joining head having a relatively broad surface for joining to the base block so as to distribute the load applied to the shank over an area of a matching seat formed in the base block.

The person skilled in the art will be able to devise, without any difficulty, variations and/or additions to that described, without thereby departing from the scope of protection of the present invention as defined in the claims below.

## Claims

1. Stem for a support feet for heavy bodies, in particular operating machines and the like, characterized by comprising a shank (2;20) and an end-piece (3;30) shaped so as to form at one end thereof a joining head (7) which can be joined to a base block (9), the shank (2;20) and the end-piece (3;30) being formed as separate parts and being provided with mutual joining means (4,8;40,80;41,81;82,42) for joining the end-piece (3;30) to one end of the shank (2;20).

2. Stem according to Claim 1, in which said joining head (7) is round.

3. Stem according to Claim 2, in which said joining head (7) is substantially spherical.

4. Stem according to Claim 1, 2 or 3, in which said mutual joining means (4,8;40,80;41,81;82,42) are engaging means.

5. Stem according to Claim 4, in which said engaging means comprise a pin (4;40;41) which is provided at said end of the shank (2) and can be engaged into a corresponding hole (8;80;81) provided in said end-piece (3).

6. Stem according to Claim 4, in which said engaging means comprise a pin (42) projecting from said end-piece (30) and engageable in a corresponding hole (82) extending inside the stem (20) axially from said end.

7. Stem according to Claim 5 or 6, in which said pin (4;41;42) and said hole (8;80;82) have a circular cross-section.

8. Stem according to Claim 7, in which said pin (4;42) engages inside said hole (8;82) with interference so as to form a cylindrical connection between the shank (2;20) and the end-piece (3;30).

9. Stem according to Claim 7, in which the pin (4;42) and the hole (8;82) are threaded so that the connection of the shank (2) to the end-piece (3) is performed by means of screwing of the pin (4;42) into the hole (8;82).

10. Stem according to Claim 7, in which the external surface of the pin (41) and the internal surface of the hole (81) are knurled.

11. Stem according to Claim 5 or 6, in which said pin (40) and said hole (80) have a polygonal cross-section so that engagement of the pin inside the hole forms a prism-type connection.

12. Support foot for heavy bodies, in particular operating machines and the like, comprising a stem (1) for joining the foot (14) to the heavy body, which is joined to a base block (9) intended to rest on a support surface, characterized in that the stem (1) is in accordance with any one of the preceding claims.
